# EUROPÄISCHE PATENTSCHRIFT

(11) **EP 0 418 710 B1**
(45) Veröffentlichungstag und Bekanntmachung des Hinweises auf die Patenterteilung: **13.04.1994**
(21) Anmeldenummer: 90117532.3
(22) Anmeldetag: 12.09.1990
(51) Int. Cl.: G21C 17/01, G21C 19/00

(54) **Einrichtung zum Positionieren eines Mastes zur Inspektion und/oder Reparatur einer Kernumfassung eines wassergekühlten Kernreaktors**
Positioning device for an inspection and/or repair mast of a water cooled nuclear reactor core barrel
Dispositif pour positionner un mât d'inspection et/ou de réparation d'une cloison d'un coeur d'un réacteur nucléaire refroidi à l'eau

(30) Priorität: 18.09.1989 DE 3931079
(43) Veröffentlichungstag der Anmeldung: 27.03.1991
(73) Patentinhaber: ABB Reaktor GmbH, D-68167 Mannheim (DE)
(72) Erfinder: Haller, Hans, D-6800 Mannheim 1 (DE)
(74) Vertreter: Rupprecht, Klaus, Dipl.-Ing.

(56) Entgegenhaltungen:
- EP-A- 0 063 225
- EP-A- 0 143 595
- FR-A- 2 435 080

## Beschreibung

Die Erfindung betrifft eine Einrichtung zum Positionieren eines Mastes zur Inspektion und/oder Reparatur einer Kernumfassung eines wassergekühlten Kernreaktors, wobei der Fuß des Mastes mit Zentrierstiften versehen ist, die unter Fernsehkamerabeobachtung in Bohrungen einer am Boden der Kernumfassung angeordneten Stützplatte einführbar sind.

Mit einer derartigen allgemein bekannten Einrichtung erfolgt die Inspektion und/oder Reparatur einer Kernumfassung, die als Teil des Kerngerüstes auf Seite 87 bis 89 des Thiemig-Taschenbuches "Druckwasserreaktoren für Kernkraftwerke" vom Februar 1974 beschrieben ist. Die Kernumfassung ist eine der Peripherie des Brennelementverbandes angepaßte Blechkonstruktion, die mittels Schrauben mit dem Kerngerüst verbunden ist. Bei der Inspektion und Reparatur sind vornehmlich diese Schrauben zu prüfen und gegebenenfalls auszutauschen.

Zur Positionierung des mehrere Meter langen Mastes eines solchen Inspektions- und/oder Reparatureinrichtung unter einer Wasserabdeckung werden seither zumindest zwei Fernsehkameras eingesetzt, die von der Seite her auf die Zentrierstifte und die Bohrungen gerichtet sind. Mit Hilfe von Monitoren wird versucht, die Zentrierstifte und die Bohrungen konzentrisch zueinander anzuordnen. Wegen der schrägen Betrachtungsrichtung durch die seitlich angeordneten Fernsehkameras ist die Ausrichtung jedoch ungenau. Neben einem hohen Zeitaufwand ist daher eine Beschädigung von Zentrierstiften oder Bohrungen wegen deren fehlender Konzentrität zueinander nicht auszuschließen.

Es ist die Aufgabe der Erfindung, eine Einrichtung der eingangs genannten Art anzugeben, die durch präzise Positionierung eine Beschädigung von Zentrierstiften oder Bohrungen ausschließt.

Gelöst wird diese Aufgabe erfindungsgemäß dadurch, daß dem Mast zwischen der Fernsehkamera und der Stützplatte ein Markierungsträger zugeordnet ist, dessen Markierung mit einer an der Stützplatte angebrachten Markierung in Deckung bringbar ist, wobei die Zentrierstifte und die Bohrungen zu den Markierungen derart angebracht sind, daß nach Erreichen der Deckungsgleichheit die jeweiligen Zentrierstifte und Bohrungen zueinander konzentrisch angeordnet sind.

Die Betrachtungsrichtung der einzigen Fernsehkamera ist dabei senkrecht auf die Markierungen und auf die Stützplatte gerichtet, so daß ihre Deckungsgleichheit durch seitliches Verfahren des Mastes präziser herstellbar ist.

Gemäß einer bevorzugten Ausgestaltung wird vorgesehen, daß der Markierungsträger eine mit dem Mast verbundene Grundplatte ist, die über den Querschnitt des Mastes hinausragt, eine Halterung für die Fernsehkamera trägt und zwei voneinander beabstandete Zentrierstifte aufnimmt.

Damit wird sichergestellt, daß die Kamerahalterung und der Markierungsträger einen starr miteinander verbundenen Bauteil bilden, der eine präzise Positionierung unterstützt.

Vorzugsweise ist der herausragende Bereich der Grundplatte mit einer symmetrisch zu den Zentrierstiften ausgebildeten Aussparung versehen, die von einem als Markierung diendenen Faden überspannt ist, wobei senkrecht zum Faden auf der Symmetrieachse der Aussparung ein Steg erstreckt ist, der ebenfalls als Markierung dient.

Da der Faden über eine den hinausragenden Bereich durchsetzende Aussparung erstreckt ist, kann von der Kamera sowohl der Faden als auch die Markierung in der Stützplatte erfaßt und durch seitliches Bewegen des Mastes mit Hilfe eines Monitors in Deckung gebracht werden.

Dabei verbindet die gedachte Fortführung des Fadens die Zentren der Zentrierstifte miteinander.

Die Markierung an der Stützplatte ist als Rille ausgebildet, deren Breite der Fadenstärke entspricht. Dabei ist der Mittenabstand zwischen den Bohrungen durch eine senkrecht zur Rille angeordneten Querrille markiert, deren Breite der Breite des der Aussparung zugeordneten Steges entspricht, wobei die Rille und die Querrille die gleiche Lage zu den Bohrungen einnehmen wie der Faden bzw. der Steg zu den Zentrierstiften.

Damit wird nach dem vollständigen Abdecken der Rille durch den Faden und der Querrille durch den Steg eine präzise Positionierung erzielt.

Anhand eines Ausführungsbeispieles wird die erfindungsgemäße Einrichtung beschrieben.

Dabei zeigt die
- Fig. 1: eine in einem Kerngerüst angeordnete Kernumfassung mit einem Teil eines Mastes,
- Fig. 2: den Teilbereich einer Stützplatte in einer Aufsicht,
- Fig. 3: eine Frontansicht einer Grundplatte mit der Kamerahalterung und der Stützplatte, teilweise im Schnitt
- Fig. 4: eine Ansicht in Pfeilrichtung IV der Fig. 3 teilweise im Schnitt und
- Fig. 5: einen Schnitt entlang der Linie V-V der Fig. 3.

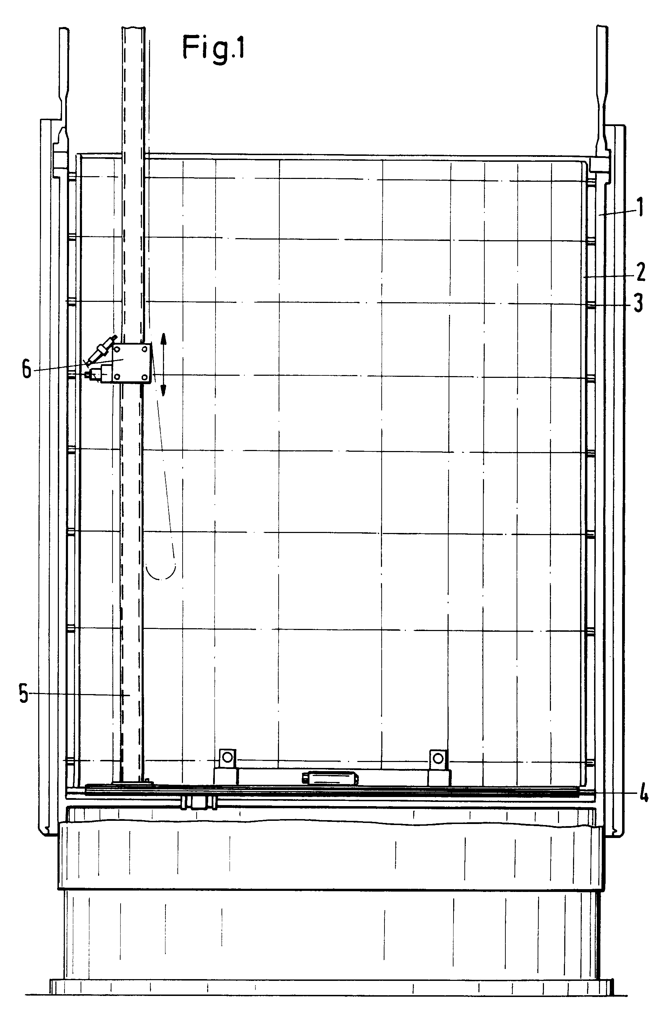

Die Fig. 1 zeigt in einem Längsschnitt einen Teilbereich eines Kerngerüstes 1 einer wassergekühlten Kernreaktoranlage. Das Kerngerüst nimmt eine Kernumfassung 2 auf, deren Peripherie einem nicht dargestellten Brennelementverband angepaßt ist. Sie weist daher, in ihrem Querschnitt betrachtet, eine Vielzahl von Abknickungen auf. Im Bereich jeder Abknickung ist die Kernumfassung mit Schrauben 3 am Kerngerüst 1 befestigt. Zur Inspektion oder Reparatur dieser Schrauben 3 ist eine Stützplatte 4 am Boden des Kerngerüstes angeordnet, auf der ein Mast 5 abgestützt ist. An seinem oberen, nicht dargestellten Ende kann der Mast von einem Hebezeug gehalten werden. Entlang des Mastes ist ein Inspektions- oder Reparaturgerät 6 zur Prüfung oder Reparatur der Schrauben 3 verfahrbar.

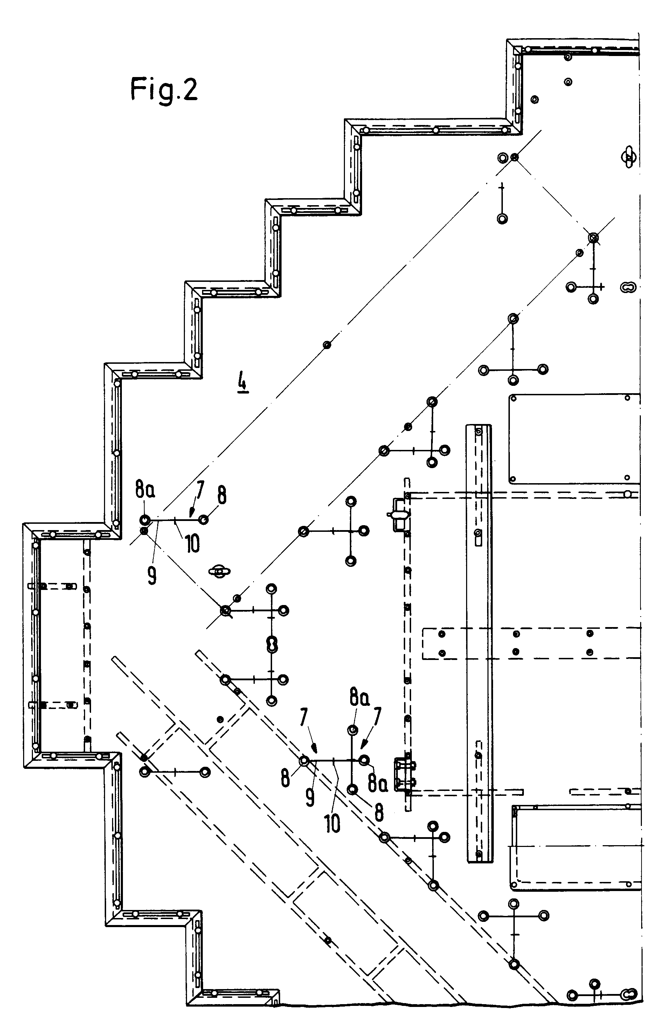

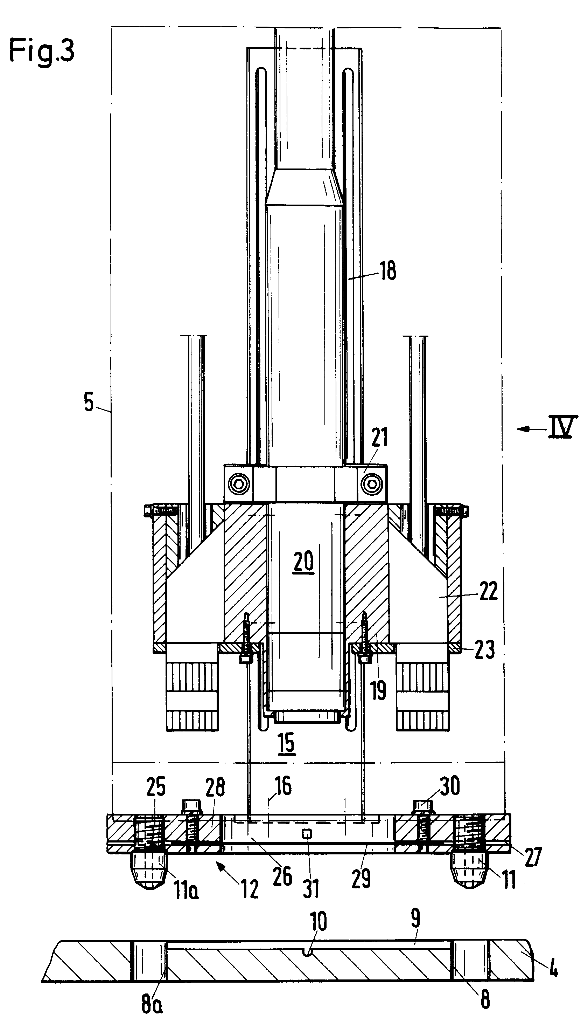

Wie aus der Fig. 2, die eine Aufsicht auf einen Teilbereich der Stützplatte 4 zeigt, zu ersehen ist, sind dort mehrere Bohrungspaare 7 eingebracht, deren Bohrungen 8, 8a jeweils mit einer als Rille 9 ausgebildeten Markierung verbunden sind. Die gedachte Fortsetzung der Rille verläuft dabei jeweils durch das Zentrum der Bohrung 8, 8a. Der Mittenabstand eines Bohrungspaares 7 ist durch eine senkrecht zur Rille verlaufende Querrille 10 markiert, die die Rille 9 schneidet. Zum Erreichen der verschiedenen Prüfpositionen muß der Mast 5 über ihm zugeordnete Zentrierstifte 11, 11a (Fig. 3) in die entsprechenden Bohrungspaare 7, deren Abstand dem Abstand zwischen den Zentrierstiften entspricht, eingesetzt werden.

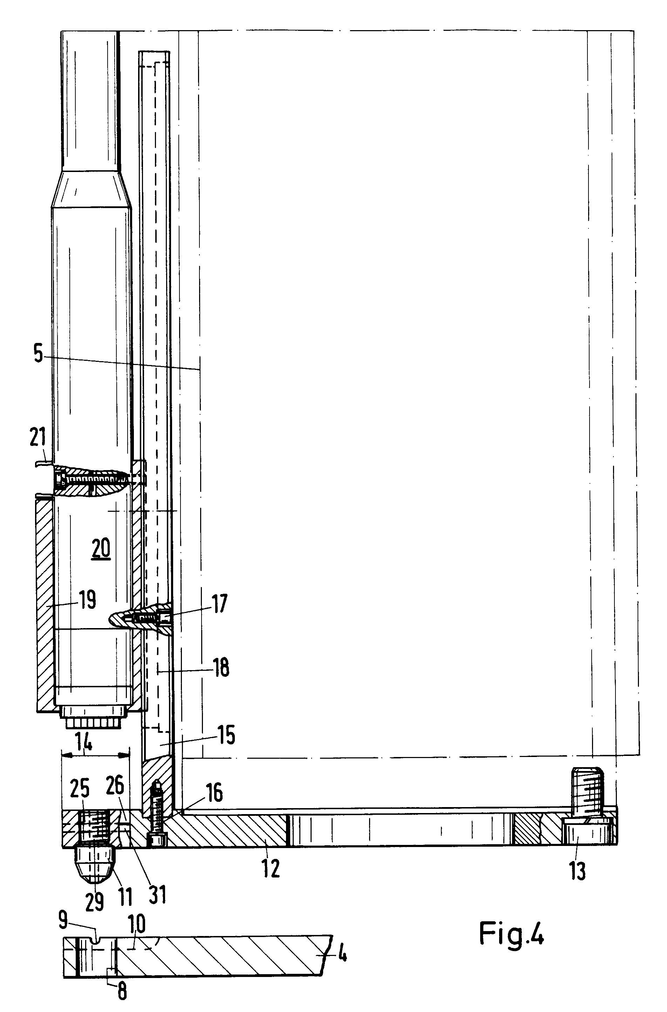

Zur Positionierung des in den Fig. 3 und 4 nur in strichpunktierten Linien angedeuteten Mastes 5 ist an seiner Unterseite eine Grundplatte 12 mittels Schrauben 13 befestigt. Die Grundplatte 12 ragt an einer Mastunterkante mit einem Bereich 14 über den Mastquerschnitt hinaus. In diesem Bereich 14 ist eine parallel zum Mast 5 erstreckte Konsole 15 eingelassen und mit einer Schraubverbindung 16 befestigt. In einer mit Schrauben 17 in den Langlöchern 18 der Konsole 15 befestigten Halterung 19 ist eine Fernsehkamera 20 abgestützt und mit einer Klemme 21 gesichert. Die Halterung 19 nimmt noch zwei Beleuchtungskörper 22 auf, die über Halteelemente 23, 24 gesichert sind. In Gewindebohrungen 25 sind die Zentrierstifte 11, 11a in den Bereich 14 der Grundplatte 12 eingeschraubt. In symmetrischer Anordnung zu den Zentrierstiften 11, 11a weist der Bereich 14 eine Aussparung 26 auf, die näher an die Konsole 15 heranreicht als die Gewindebohrung 25. Eine Bohrung 27 ist in die Wangen 28 des Bereichs 14 eingebracht. Sie durchsetzt dabei diametral die dort eingeschraubten Zentrierstifte 11, 11a. Eine als Faden 29 oder Draht ausgebildete Markierung ist in die Bohrung 27 derart eingebracht, daß sie die Aussparung 26 überspannt. Mit Klemmschrauben 30 ist der Faden oder Draht in der Bohrung 26 gehalten. Zur Markierung des Mittenabstandes kragt von dem Grund der Aussparung 26 ein Steg 31 aus, der den Faden 29 übergreift.

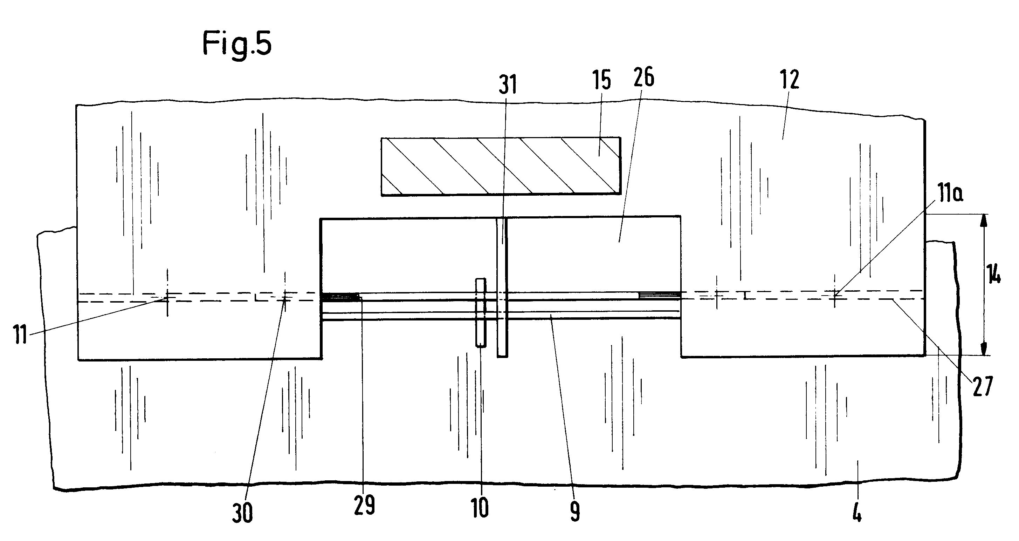

Nach dem der Mast 5 in einer Grobeinstellung soweit an seine Position herangefahren ist, daß in einem nicht dargestellten Monitor die Fernsehkamera neben dem Faden 29 und dem Steg 31 die Rille 9 und die Querrille 10 der Stützplatte 4 erkennt (Fig. 5), wird über eine nicht dargestellte Feineinstellung der Mast 5 soweit seitlich verfahren, bis der Faden 29 mit der Rille 9 und der Steg 31 mit der Querrille 10 in Deckung gebracht ist. Die Fadendicke und die Rillenbreite bzw. die Stegbreite und die Querrillenbreite entsprechen dabei einander. Durch die quasi senkrechte Blickrichtung der einzigen Fernsehkamera entsteht keine Bildverzerrung, so daß über einen Monitor die präzise Positionierung möglich ist.

Während in der Fig. 5 die Positionierung dargestellt ist, bevor die Markierungen in Deckung gelangen, liegen nach den Fig. 3 und 4 die Zentrierstifte 11, 11a und die Bohrungen 8, 8a bereits auf der gleichen Achse, so daß der Mast nur noch abgesenkt werden muß, bis die Grundplatte 12 des Mastes auf der Stützplatte 4 aufgesetzt ist.

## Patentansprüche

1. Einrichtung zum Positionieren eines Mastes (5) zur Inspektion und/oder Reparatur einer Kernumfassung (2) eines wassergekühlten Kernreaktors, wobei der Fuß des Mastes mit Zentrierstiften (11,11a) versehen ist, die unter Fernsehkamerabeobachtung in Bohrungen (8,8a) einer am Boden der Kernumfassung angeordneten Stützplatte (4) einführbar sind, dadurch gekennzeichnet, daß dem Mast (5) zwischen der Fernsehkamera (20) und der Stützplatte (4) ein Markierungsträger zugeordnet ist, dessen Markierung mit einer an der Stützplatte angebrachten Markierung in Deckung bringbar ist, wobei die Zentrierstifte (11,11a) und die Bohrungen (8,8a) zu den Markierungen derart angebracht sind, daß nach Erreichen der Deckungsgleichheit die jeweiligen Zentrierstifte und Bohrungen zueinander konzentrisch angeordnet sind.

2. Einrichtung nach Anspruch 1, dadurch gekennzeichnet, daß der Markierungsträger eine mit dem Mast (5) verbundene Grundplatte (12) ist, die über den Querschnitt des Mastes hinausragt, eine Halterung (19) für die Fernsehkamera (20) trägt und zwei voneinander beabstandete Zentrierstifte (11,11a) aufnimmt.

3. Einrichtung nach Anspruch 2, dadurch gekennzeichnet, daß der hinausragende Bereich (14) der Grundplatte (12) mit einer symmetrisch zu den Zentrierstiften (11,11a) ausgebildeten Aussparung (26) versehen ist, die von einem als Markierung dienenden Faden (29) überspannt ist, und daß senkrecht zum Faden auf der Symmetrieachse der Aussparung ein Steg (31) erstreckt ist, der ebenfalls als Markierung dient.

4. Einrichtung nach Anspruch 3, dadurch gekennzeichnet, daß die gedachte Fortführung des Fadens (29) die Zentren der Zentrierstifte (11,11a) verbindet.

5. Einrichtung nach Anspruch 3 oder 4, dadurch gekennzeichnet, daß die Markierung an der Stützplatte (4) als Rille (9) ausgebildet ist, deren Breite der Fadenstärke entspricht, daß der Mittenabstand zwischen den Bohrungen (8,8a) durch eine senkrecht zur Rille (9) angeordneten Querrille (10) markiert ist, deren Breite der Breite des der Aussparung (26) zugeordneten Steges (31) entspricht, und daß die Rille (9) und die Querrille (10) die gleiche Lage zu den Bohrungen (8,8a) einnehmen wie der Faden (29) bzw. Steg (31) zu den Zentrierstiften (11, 11a).

## Claims

1. Apparatus for positioning a mast (5) for the inspection and/or repair of a core shroud (2) of a water-cooled nuclear reactor, the foot of the mast being provided with centring pins (11, 11a), which can be introduced, under television camera surveillance, into bores (8, 8a) of a support plate (4) arranged at the bottom of the core shroud, characterized in that the mast (5) is assigned a marking element between the television camera (20) and the support plate (4), the marking of which element can be brought into line with a marking made on the support plate, the centring pins (11, 11a) and the bores (8, 8a) being brought to the markings in such a way that, once they have been brought into line, the respective centring pins and bores are arranged concentrically to one another.

2. Apparatus according to claim 1, characterized in that the marking element is a baseplate (12) which is connected to the mast (5), protrudes beyond the cross-section of the mast, bears a holder (19) for the television camera (20) and receives two spaced-apart centring pins (11, 11a).

3. Apparatus according to claim 1 or 2, characterized in that the protruding region (14) is provided with a clearance (26) which is formed symmetrically to the centring pins (11, 11a) and is spanned by a thread (29) serving as a marking, and in that there is extended perpendicularly to the thread on the axis of symmetry of the clearance a cross-piece (31), which likewise serves as a marking.

4. Apparatus according to claim 3, characterized in that the imaginary continuation of the thread (29) joins up the centres of the centring pins (11, 11a).

5. Apparatus according to one of claims 1 to 4, characterized in that the marking on the support plate (4) is given the form of a groove (9), the width of which corresponds to the thickness of the thread, in that the centre-to-centre distance between the bores (8, 8a) is marked by a cross-groove (10) which is arranged perpendicular to the groove (9) and the width of which corresponds to the width of the cross-piece (31) assigned to the clearance (26), and in that the groove (9) and the cross-groove (10) assume the same position with respect to the bores (8, 8a) as the thread (29) and the cross-piece (31) assume with respect to the centring pins (11, 11a).

## Revendications

1. Dispositif de positionnement d'un mât (5) en vue de l'inspection et/ou de la réparation de l'enveloppe du coeur (2) d'un réacteur nucléaire refroidi par l'eau, le pied du mât étant pourvu de broches de centrage (11, 11a) qui peuvent être introduites, avec observation par une caméra de télévision, dans des trous (8, 8a) d'une plaque d'appui (4) disposée sur le fond de l'enveloppe du coeur, caractérisé par le fait qu'il est associé au mât (5), entre la caméra de télévision (20) et la plaque d'appui (4), un support de repère dont le repère est amené en coïncidence avec un repère placé sur la plaque d'appui, les broches de centrage (11, 11a) et les trous (8, 8a) étant disposés par rapport aux repères de manière telle que, lorsque les repères coïncident, les broches de centrage et les trous correspondants soient concentriques les uns aux autres.

2. Dispositif selon la revendication 1, caractérisé par le fait que le support de repère est une plaque de base (12) qui est liée au mât (5), dépasse au-delà de la section de celui-ci, porte un moyen de support (19) pour la caméra de télévision (20) et reçoit deux broches de centrage (11, 11a) disposées à distance l'une de l'autre.

3. Dispositif selon la revendication 2, caractérisé par le fait que la partie saillante (14) de la plaque de base (12) est pourvue d'un évidement (26) qui est agencé de façon symétrique par rapport aux broches de centrage (11, 11a) et en travers duquel est tendu un fil (29) servant de repère, et par le fait qu'une barrette (31) s'étend perpendiculairement audit fil sur l'axe de symétrie de l'évidement et sert également de repère.

4. Dispositif selon la revendication 3, caractérisé par le fait que le prolongement imaginaire du fil (29) relie les centres des broches de centrage (11, 11a).

5. Dispositif selon la revendication 3 ou 4, caractérisé par le fait que le repère prévu sur la plaque d'appui (4) est agencé sous forme de rainure (9) dont la largeur correspond à la grosseur du fil, par le fait que le milieu de la distance entre les trous (8, 8a) est marqué par une rainure transversale (10) qui est disposée perpendiculairement à la rainure (9) et dont la largeur correspond à la largeur de la barrette (31) associée à l'évidement (26), et par le fait que la rainure (9) et la rainure transversale (10) occupent la même position par rapport aux trous (8, 8a) que le fil (29) et la barrette (31) par rapport aux broches de centrage (11, 11a).
